# EUROPÄISCHE PATENTSCHRIFT

(11) **EP 1 961 805 B1**
(45) Veröffentlichungstag und Bekanntmachung des Hinweises auf die Patenterteilung: **08.04.2020**
(21) Anmeldenummer: 07103040.7
(22) Anmeldetag: 26.02.2007
(51) Int. Cl.: C12H 1/044, C12H 1/056, B01J 20/18, B01J 20/26, B01J 20/20, B01J 20/28, B01D 39/18

(54) **FILTERSCHICHT ZUR GEZIELTEN ENTFERNUNG VON 2,4,6-TRICHLORANISOL AUS WEIN**
FILTER LAYER FOR TARGETED REMOVAL OF 2,4,6-TRICHLOROANISOLE FROM WINE
COUCHE FILTRANTE POUR L'ÉLIMINATION CIBLÉE DU 2,4,6-TRICHLORO-ANISOLE DU VIN

(43) Veröffentlichungstag der Anmeldung: 27.08.2008
(73) Patentinhaber: Filtrox AG, 9000 St. Gallen (CH)
(72) Erfinder: EBERT, Jürgen, 9500 Wil (CH)
(74) Vertreter: Hepp Wenger Ryffel AG

(56) Entgegenhaltungen:
- EP-A- 1 649 916
- EP-A- 1 790 714
- EP-A1- 0 647 465
- WO-A-01/55292
- WO-A-96/37293
- WO-A-2006/024767
- WO-A2-01/88082
- JP-A- 1 005 481
- JP-A- 63 049 212
- US-A1- 2005 249 851
- DATABASE WPI Week 198908 Derwent Publications Ltd., London, GB; AN 1989-058096 XP002437739 & JP 01 010976 A (KIRIN BREWERY KK) 13. Januar 1989 (1989-01-13)

## Beschreibung

Die Erfindung betrifft die Verwendung einer Filterschicht mit einem Adsorbens zur gezielten Entfernung eines Stoffes, nämlich 2,4,6-Trichloranisol, welcher den Geschmack beeinträchtigt, aus Wein, sowie ein Verfahren zur Herstellung einer solchen Filterschicht und ein Verfahren zur Entfernung von TCA aus Wein, gemäss den unabhängigen Patentansprüchen. In der Weinproduktion ist insbesondere der Korkgeschmack ein grosses Problem. Der jährlich der Weinindustrie entstehende Schaden durch Korkgeschmack wird auf etwa 200 Mio. US-$ geschätzt. Als hauptsächlich verantwortlich für den Korkgeschmack im Wein wurde 2,4,6-Trichloranisol (TCA) identifiziert, das vermutlich durch Mikroorganismen ausgehend von chlorierten Verbindungen produziert wird. Die menschliche Wahrnehmung von TCA in Wein reicht hinab bis zu etwa 5 ng/l, jedoch wird selbst bei noch geringeren Mengen von bspw. etwa 2 ng/l noch eine Maskierung von gewünschten Fruchtaromen festgestellt.

Verschiedenste Ansätze wurden vorgeschlagen, um TCA-Kontaminationen in Wein zu verhindern bzw. bereits vorhandenes TCA aus Wein zu entfernen - siehe z.B. WO 01/88082, WO01/55292 und JP64-54841. Bislang hat keine der bekannten Methoden grössere Bedeutung erlangt, insbesondere aus Kostengründen und wegen der nur unzureichenden Spezifität für TCA, sodass auch andere Geschmacksstoffe entfernt und der Charakter des Weins in nicht tolerierbarem Mass verändert wird.

Auch die Behandlung von Wein mit Milch bzw. Sahne/Milch-Mischungen zur Entfernung von TCA ist bekannt (in USA zulässige zur Behandlung von Wein gemäss 27 CFR 24.246), nicht jedoch Daten über das durch eine solche Behandlung zu erzielende Aromaprofil. Zudem ist das Einschleppen von allergenen Substanzen durch die Milch ein potentielles Problem für Allergiker.

Es ist daher eine Aufgabe der Erfindung, die Nachteile des Bekannten zu vermeiden, insbesondere also die Verwendung einer Filterschicht und ein Verfahren zur Verfügung zu stellen, welches eine rasche, möglichst selektive und kostengünstige Entfernung von TCA aus Wein ermöglicht.

Die Aufgabe wird gelöst durch die Verwendung einer Filterschicht mit einem Adsorbens zur gezielten Entfernung von TCA aus Wein, sowie ein Verfahren zur Herstellung einer solchen Filterschicht und ein Verfahren zur Entfernung von TCA, gemäss den unabhängigen Patentansprüchen.

Die Filterschicht gemäss der Erfindung enthält ein Adsorbens zur gezielten Entfernung von TCA, welcher den Geschmack beeinträchtigt, aus Wein.

Unter einer Filterschicht wird hier und im folgenden eine insbesondere flächige Struktur verstanden, durch welche hindurch ein fluides Medium unter Abtrennung von unerwünschten Bestandteilen wie z.B. Feststoffen und/oder insbesondere in Lösung vorliegenden Geschmacks- und/oder Geruchsstoffen hindurchgeleitet werden kann. Im Rahmen der Erfindung sind dies flächig vorkonfektionierte Filterblätter, bspw. hergestellt aus aufbereiteten Zellstoffen, ggf. mit eingearbeiteten Füllstoffen (bspw. Kieselguren oder Perlite) und üblichem Nassfestmittel (bspw. PAAE-Harze).

Erfindungsgemäss umfasst die Filterschicht eine Matrix, welche für einen definierten dreidimensionalen Zusammenhalt der Filterschicht im Trockenzustand sorgt. Hierbei handelt es sich um eine Faserstoff-Matrix, vorzugsweise mit Fasern aus Cellulose, die durch ein fachübliches Nassfestmittel fixiert ist.

Das Adsorbens der Filterschicht weist bevorzugt eine derart gewählte Porosität und/oder Ladungsverteilung auf, dass es 2,4,6-Trichloranisol (TCA) zu binden vermag. Andere Geschmacksstoffe insbesondere des Weins vermag das Adsorbens hingegen im wesentlichen nicht zu binden, wie z.B. Isoamylalkohol, 2-Phenylethanol, Ethyllactat, Tyrosol, Tyrptophol, Hexanol, Isoamylacetat, Ethylhexanoat, Ethyloctanoat, Methionol, Ethylsuccinat, Ethylbutanoat, Benzylalkohol, Hexylacetat, Phenethylacetat, 4-Vinylguaiacol, Ethylvalin, Furfural, cis-/trans-3-Hexenol, Linalol, Ethyldecanoat, Acetovanillon, Vanillin, Heptanol, Ethylvanillat, Guaiacol, b-Damascenon, 5-Methylfurfural, Phenylacetaldehyd. Das Aromaprofil des Weins wird also durch die Entfernung des TCA im wesentlichen nicht beeinträchtigt, da mit hoher Selektivität lediglich TCA entfernt wird.

Im Wesentlichen ist als Adsorbens ein Molekularsieb in der Filterschicht angeordnet, nämlich ein Zeolith. Die Adsorption von polyhalogenierten, insbesondere polychlorierten Aromaten wie bspw. Anisol an Zeolith ist in der Literatur nicht bekannt. Besonders bevorzugt handelt es sich bei dem Zeolith um ein Aluminiumsilikat mit Hohlraumstruktur, insbesondere um ein Aluminiumsilikat mit im wesentlichen kugelförmigen Hohlräumen mit weniger als 2 nm im Durchmesser, insbesondere mit einem Durchmesser von etwa 1,2 nm, welche Hohlräume durch Kanäle von etwa 740 pm bis 800 pm verbunden sind.

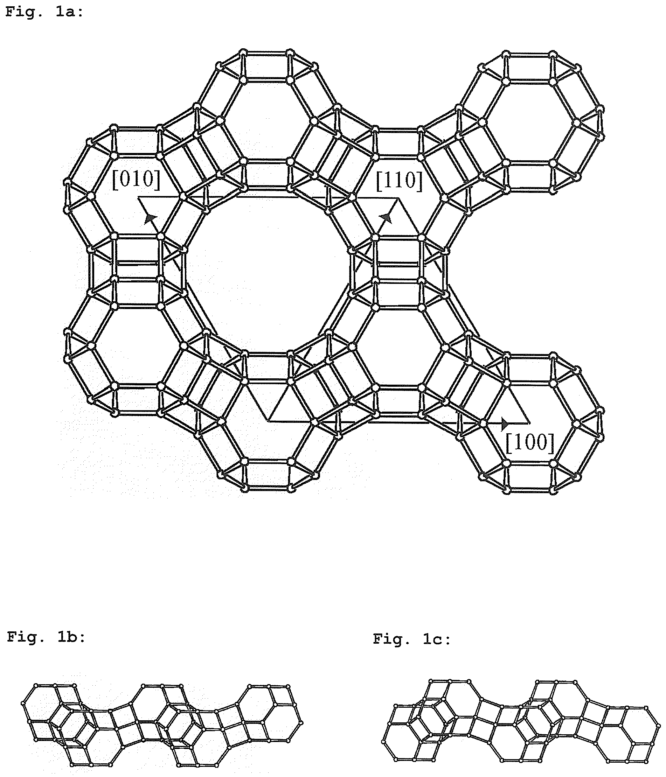

Erfindungsgemäss weist das Adsorbens die periodische Baueinheit (PBU) der Faujasite auf (vergl. Fig. 1, unten), und zwar mit einem Verhältnis von Si/Al von ≥ 5, vorzugsweise von ≥ 10. Derartige Zeolithe sind dem Fachmann an sich bekannt und im Handel erhältlich, bspw.
- Grace Davison, 7500 Grace Drive, Columbia, MD 21044, US: Grace Zeolite Products: Zeolite Y, ZSM-5, Beta;
- Zeolyst International, P.O. Box 830, Valley Forge, PA 19482, US:
   Zeolite Y (FAU): CBV400, CBV720, CBV760; CBV780, CBV901;
- Natural Faujasite Company, Natural Faujasite Company L.L.C, P.O.Box: 708 al-jubeiha 11941, Amman-Jordan Jordan Faujasite.

Es hat sich gezeigt, dass die Kombination aus der Faujasit-PBU und dem hohen Si/Al-Verhältnis eine besonders gute Adsorption von TCA gewährleisten kann. Hinsichtlich der Faujasit-Struktureinheit wird verwiesen auf International Zeolite Association (www.iza-online.org), Database of Zeolite Structures, "The Faujasite Familiy". In Vergleichsversuchen wurde gezeigt, dass andere Zeolithstrukturen wie bspw. BEA (mit Si/Al-Verhältnissen von 150 bzw. 300) und MFI (Nomenklatur gemäss International Zeolite Association) nur schwach bis gar nicht TCA zu binden vermögen. Ein Adsorbens, welches geeignet ist zur Verwendung in der vorliegenden Erfindung ist im Detail in der Europäischen Patentanmeldung EP 06005030 und der US-Patentanmeldung 11/287,964 (G3 Enterprises, Modesto, CA, USA) beschrieben.

In Gerüstsilikaten können die vierwertigen Siliziumatome teilweise durch dreiwertige Aluminiumatome ersetzt sein, wie bspw. in den Zeolithen; hierbei ist der Einbau jedes Aluminiumatoms mit dem Auftreten einer negativen Ladung verknüpft. Zur Kompensierung der negativen Ladungen sind Kationen enthalten wie bspw. H⁺, NH₄⁺, Alkalikationen, Kationen der seltenen Erden. Im Rahmen der Erfindung besonders bevorzugt sind H⁺ und/oder Na⁺. Die hohen Si/Al-Verhältnisse im Rahmen dieser Erfindung bedeuten also Gerüstsilikate mit lediglich geringem Austausch von Siliziumatomen gegen Aluminiumatome.

Die Menge des Adsorbens in der Filterschicht und die Flussrate durch die Filterschicht sind die Hauptfaktoren, mit denen die Entfernung von z.B. TCA gesteuert werden kann; hierbei ist eine Reduktion des TCA auf < 1 ng/l gewünscht. Die Flussrate durch die Filterschicht kann in an sich bekannter Art und Weise bspw. durch die Porengrösse der Filterschicht und/oder den angelegten Über-/Unterdruck bestimmt werden. In weiteren bevorzugten Ausführungsformen ist das Adsorbens in der (trockenen) Filterschicht in einem Anteil von etwa 4,5 Gew.% bis etwas 6,5 Gew.% enthalten. Bei einer derartigen Menge des Adsorbens in der Filterschicht kann bei einer grosstechnisch üblichen Flussrate im Bereich von 300 bis 400 l/m²/h durch eine Filterschicht und einem ursprünglichen TCA-Gehalt von 20 ng/l ohne weiteres eine Reduktion unter 1 ng/l TCA erzielt werden.

Ergänzend zu den vorgenannten Zeolith-Typen kann es sich bei dem Adsorbens auch um Aktivkohle; nicht-ionische, insbesondere quervernetzte Harze wie z.B. Divinylbenzol-Harze; PVPP (Polyvinylpolypyrrolidon); synthetische aliphatische Polymere wie z.B. PE (Polyethylen), HDPE (Hochdichtes PE), PP (Polypropylen), HDPP (Hochdichtes Polypropylen), UHMW PE (Polyethylen mit sehr hohem Molekulargewicht), ggf. jeweils modifiziert mit Säure- und/oder Hydroxylgruppen, handeln, soweit vorstehend genannte Anforderungen an die (selektive) Adsorptionsfähigkeit von z.B. TCA durch die entsprechende Auswahl des Additivs erfüllt werden.

Ein weiterer Aspekt der Erfindung betrifft ein Verfahren zum Herstellen einer Filterschicht, wobei das Adsorbens hinzugefügt wird zur gezielten Entfernung von TCA aus Wein. Besonders vorteilhaft wird das Adsorbens in einer Vorstufe mit Wasser vorgemischt und anschliessend mit den weiteren Bestandteilen der Filterschicht gemischt. Hierdurch kann auf besonders einfache Art und Weise eine homogene Verteilung des Adsorbens in der resultierenden Filterschicht gewährleistet werden. Als Adsorbens wird, wie vorstehend beschrieben, ein solches mit der periodischen Baueinheit (PBU) der Faujasite eingesetzt, und zwar mit einem Verhältnis von Si/Al von ≥ 5, vorzugsweise von ≥ 10.

Die Erfindung betrifft in einem weiteren Aspekt ein Verfahren zur Entfernung eines Stoffes, welcher den Geschmack beeinträchtigt, nämlich TCA, aus Wein. Dieses Verfahren umfasst den Schritt des Inkontaktbringens mit, insbesondere das Durchleiten durch eine Filterschicht enthaltend ein Adsorbens mit der periodischen Baueinheit (PBU) der Faujasite mit einem Verhältnis von Si/Al von ≥ 5, vorzugsweise von ≥ 10.

Die Erfindung wird nachfolgend anhand von Figuren aus Ausführungsbeispielen erläutert, ohne den Gegenstand der Erfindung auf die gezeigten Ausführungsbeispiele zu beschränken. Es zeigen
- Fig. 1:: Periodische Baueinheit des Faujasit
a) Perspektive entlang [001];
b) Perspektive entlang [010];
c) Perspektive entlang [110].
- Fig. 2:: Vergleichsversuche zur Adsorption von Aromastoffen des Weins.
- Fig. 3:: Vergleichsversuche (Gefiltertes Flüssigkeitsvolumen je Filterfläche, aufgetragen gegen die verbleibende TCA Konzentration).

In Fig. 1 ist die periodische Baueinheit (PBU) der Faujasit-Familie gezeigt, mit SiO₄- und AlO₄⁻-Tetraedern als kleinsten Baueinheiten (Fig. 1a: Perspektive entlang [001]; Fig. 1b: Perspektive entlang [010]; Fig. 1c: Perspektive entlang [110]). Durch teilweisen Ersatz von Si durch Al in Gerüstsilikaten können Zeolithe mit Faujasit-Struktureinheiten erhalten werden, welche ein im Rahmen der Erfindung gefordertes Verhältnis von Si/Al von ≥ 5, vorzugsweise von ≥ 10 aufweisen.

Eine erfindungsgemäss zu verwendende Filterschicht wurde aus den folgenden Bestandteilen hergestellt:

| | |
|---|---|
| ca. 50 Gew.% | Cellulose (Mahlgrad (SR) etwa 40-60 (Hartholz (Buche) und Weichholz (Fichte/Kiefer) ; |
| ca. 43,5 - 45,5 Gew.% | Kieselgur, nicht calciniert, mit Permeabilität kleiner 30 mDarcy (hier: Celite S von World Minerals); |
| ca. 4,5 - 6,5 Gew.% | Zeolith mit Faujasit-PBU und Si/Al-Verhältnis von 80 (Triex®, G3 Enterprises). |

Es wurde eine etwa 3.7 bis 3.9 mm dicke Filterschicht erhalten, mit welcher bei einer Filterfläche von etwa 10 m² bei einer Flussrate von etwa 350 l/m²/h eine Menge von etwa 10'000 l eines leicht mit TCA kontaminierter Wein (10 ng/l) derart behandelt werden konnte, dass der resultierende TCA Gehalt deutlich unter 1 ng/l sank.

Die Herstellung der erfindungsgemäss zu verwendenden Filterschichten kann mit dem Fachmann an sich bekannten Verfahren erfolgen. Es ist jedoch darauf zu achten, dass das Adsorbens möglichst homogen in die Filterschicht integriert wird. Dies kann besonders einfach und zuverlässig dadurch erreicht werden, dass das Adsorbens zunächst in einer vergleichsweise geringen Menge eines Trägermediums, insbesondere in Wasser vorgemischt wird, und erst dann diese Vormischung mit den weiteren Bestandteilen der Filterschicht vermischt wird. So kann bspw. die Vormischung eines geeigneten Zeoliths mit Wasser in einem Fass mit einem Stabmixer bereitet werden und anschliessend in einen grösseren Tank entleert werden, welchem der Füllstoff (im obigen Bsp. das Kieselgur) unter Rühren trocken zugegeben werden kann. Die erhaltene Mischung kann anschliessend ggf. nach Zwischenlagerung in die Mischbütte überführt werden, wo es mit dem die Matrix bildenden Material, insbesondere der Cellulose, gemischt und in an sich bekannter Art und Weise zu Filterschichten weiter verarbeitet wird.

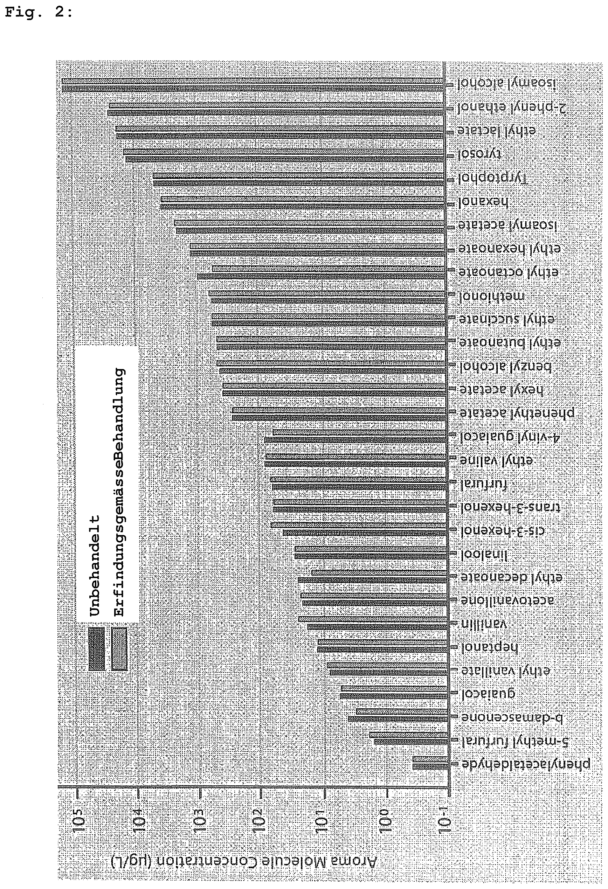

Fig. 2 zeigt ein typisches Aromaprofil von Wein, sowohl ohne als auch nach Behandlung mit der Filterschicht gemäss vorstehendem Beispiel. Es ist offensichtlich, dass die gewünschten Aromen dem Wein nur in unwesentlichem Mass von dem erfindungsgemässen Adsorbens entzogen werden, während TCA zuverlässig entfernt wird (s.o.).

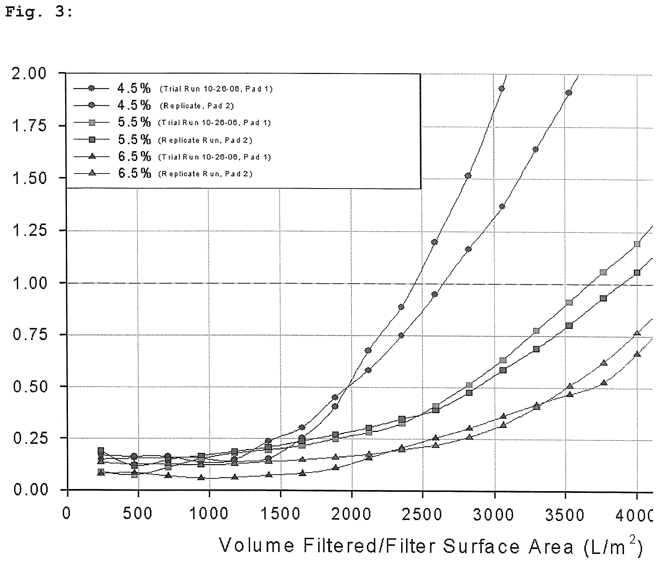

Fig. 3 zeigt eine Studie zur TCA-Entfernung aus Rotwein mit den erfindungsgemässen Filterschichten, jeweils mit verschiedenen Mengen an Adsorbens und jeweils zweifacher Messung. Der ursprüngliche TCA-Gehalt beträgt 20 ppt. Als maximal tolerierbare Menge TCA nach der Behandlung wurde 1 ng/l angenommen (siehe Abszisse). Demnach ergeben sich für die Filterschichten die folgenden filtrierbaren Volumina:

| | |
|---|---|
| 4,5 Gew.% | Absorbens (Zeolith mit Faujasit-PBU und Si/Al-Verhältnis von 80 (Triex®, G3 Enterprises) -> etwa 2'500 l/m² |
| 5,5 Gew.% | Absorbens (Zeolith mit Faujasit-PBU und Si/Al-Verhältnis von 80 (Triex®, G3 Enterprises) -> etwa 3'750 l/m² |
| 6,5 Gew.% | Absorbens (Zeolith mit Faujasit-PBU und Si/Al-Verhältnis von 80 (Triex®, G3 Enterprises) -> etwa 4'250 l/m² |

Diese hohen möglichen Durchsatzvolumina unterstreichen die Effizienz der erfindungsgemässen Filterschichten, womit ein kostengünstiges und selektives Entfernen von TCA ermöglicht ist. Insbesondere bei Verwendung eines Adsorbens mit Zeolithstruktur ist zudem eine Regenerierung der Filterschicht durch Auswaschung von gebundenem TCA mit einem geeigneten Lösungsmittel, vorzugsweise Wasser, möglich (Rückspülung).

## Patentansprüche

1. Verwendung einer Filterschicht zur gezielten Entfernung eines Stoffes, welcher den Geschmack beeinträchtigt, nämlich 2,4,6-Trichloranisol, aus Wein, wobei es sich bei der Filterschicht um ein flächig vorkonfektioniertes Filterblatt handelt, enthaltend ein Adsorbens wobei das Adsorbens die periodische Baueinheit (PBU) der Faujasite aufweist, nämlich mit einem Verhältnis von Si/Al von ≥ 5, vorzugsweise von ≥ 10 und wobei die Filterschicht zudem eine Matrix enthält, nämlich eine Faserstoff-Matrix, vorzugsweise mit Fasern aus Cellulose.

2. Verwendung gemäss Anspruch 1, **dadurch gekennzeichnet, dass** es sich bei dem Adsorbens um ein Aluminiumsilikat-Zeolith mit Hohlraumstruktur handelt, insbesondere ein Aluminiumsilikat mit im wesentlichen kugelförmigen Hohlräumen von ≤ 2 nm, insbesondere von etwa 1,2 nm im Durchmesser, welche Hohlräume durch Kanäle von etwa 740 bis 800 pm verbunden sind.

3. Verwendung gemäss einem der Ansprüche 1 bis 2, **dadurch gekennzeichnet, dass** das Adsorbens in einem Anteil von etwa 4,5 Trockengew.% bis etwas 6,5 Trockengew.% enthalten ist.

4. Verfahren zum Herstellen einer Filterschicht, wobei es sich bei der Filterschicht um ein flächig vorkonfektioniertes Filterblatt handelt, zur Verwendung gemäss einem der Ansprüche 1 bis 3, **dadurch gekennzeichnet, dass** ein Adsorbens hinzugefügt wird zur gezielten Entfernung eines Stoffes, welcher den Geschmack beeinträchtigt, nämlich 2,4,6 Trichloranisol, aus Wein, wobei das Adsorbens die periodische Baueinheit (PBU) der Faujasite aufweist, nämlich mit einem Verhältnis von Si/Al von ≥ 5, vorzugsweise von ≥ 10 und wobei die Filterschicht zudem eine Matrix enthält, nämlich eine Faserstoff-Matrix, vorzugsweise mit Fasern aus Cellulose.

5. Verfahren gemäss Anspruch 4, **dadurch gekennzeichnet, dass** das Adsorbens in einer Vorstufe mit einem Trägermedium, insbesondere mit Wasser vorgemischt wird und anschliessend mit den weiteren Bestandteilen der Filterschicht gemischt wird.

6. Verfahren zur Entfernung eines Stoffes, welcher den Geschmack beeinträchtigt, nämlich 2,4,6-Trichloranisol, aus Wein, umfassend den Schritt des Inkontaktbringens mit, insbesondere Durchleiten durch eine Filterschicht, wobei es sich bei der Filterschicht um ein flächig vorkonfektioniertes Filterblatt handelt, enthaltend ein Adsorbens mit der periodischen Baueinheit (PBU) der Faujasite, nämlich mit einem Verhältnis von Si/Al von ≥ 5, vorzugsweise von ≥ 10, wobei die Filterschicht zudem eine Matrix enthält, nämlich eine Faserstoff-Matrix, vorzugsweise mit Fasern aus Cellulose.

## Claims

1. Use of a filter layer for the targeted removal of a substance which adversely affects the taste, namely 2,4,6-trichloroanisole, from wine, wherein the filter layer is a prefabricated filter sheet comprising an adsorbent, the adsorbent having the periodic building unit (PBU) of the faujasites, namely with a ratio of Si/Al of ≥ 5, preferably of ≥ 10, and wherein the filter layer further comprises a matrix, namely a fibrous matrix, preferably comprising cellulose fibres.

2. Use according to Claim 1, **characterized in that** the adsorbent is an aluminium silicate zeolite having a void structure, in particular an aluminium silicate having essentially spherical voids having a diameter of ≤ 2 nm, in particular about 1.2 nm, which voids are connected by channels of from about 740 to 800 pm.

3. Use according to one of Claims 1 to 2, **characterized in that** the adsorbent is present in a proportion of from about 4.5% by dry weight to about 6.5% by dry weight.

4. Process for producing a filter layer, wherein the filter layer is a prefabricated filter sheet, for use according to any of Claims 1 to 3, **characterized in that** an adsorbent is added for the targeted removal of a substance which adversely affects the taste, namely 2,4,6-trichloroanisole, from wine, the adsorbent having the periodic building unit (PBU) of the faujasites, namely with a ratio of Si/Al of ≥ 5, preferably of ≥ 10, and wherein the filter layer further comprises a matrix, namely a fibrous matrix, preferably comprising cellulose fibres.

5. Process according to Claim 4, **characterized in that** the adsorbent is premixed with a carrier medium, in particular water, in a preliminary step and is subsequently mixed with the further constituents of the filter layer.

6. Process for the removal of a substance which adversely affects the taste, namely 2,4,6-trichloroanisole, from wine, comprising the step of bringing into contact with, in particular passing through, a filter layer, the filter layer being a prefabricated filter sheet comprising an adsorbent having the periodic building unit (PBU) of the faujasites, namely with a ratio of Si/Al of ≥ 5, preferably of ≥ 10, wherein the filter layer further comprises a matrix, namely a fibrous matrix, preferably comprising cellulose fibres.

## Revendications

1. Utilisation d'une couche filtrante pour l'élimination ciblée d'une matière, qui affecte le goût, à savoir le 2,4,6-trichloroanisole, du vin, la couche filtrante étant une feuille de filtre pré-confectionnée à plat, contenant un absorbant, l'absorbant présentant le motif de construction périodique (MCP) de la faujasite, à savoir doté d'un rapport de Si/Al de ≥ 5, de préférence de ≥ 10 et la couche filtrante contenant en outre une matrice, à savoir une matrice de matière fibreuse, de préférence dotée de fibres de cellulose.

2. Utilisation selon la revendication 1, **caractérisée en ce que** l'absorbant est une zéolithe de type aluminosilicate à structure creuse, en particulier un aluminosilicate doté de creux essentiellement sphériques de ≤ 2 nm, en particulier d'un diamètre d'environ 1,2 nm, lesquels creux sont reliés par des canaux d'environ 740 à 800 pm.

3. Utilisation selon l'une quelconque des revendications 1 et 2, **caractérisée en ce que** l'absorbant est contenu en une proportion d'environ 4,5 % en poids sec à environ 6,5 % en poids sec.

4. Procédé pour la préparation d'une couche filtrante, la couche filtrante étant une feuille de filtre pré-confectionnée à plat, pour l'utilisation selon l'une quelconque des revendications 1 à 3, **caractérisé en ce qu'**un absorbant est ajouté pour l'élimination ciblée d'une matière, qui affecte le goût, à savoir le 2,4,6-trichloroanisole, du vin, l'absorbant présentant le motif de construction périodique (MCP) de la faujasite, à savoir doté d'un rapport de Si/Al de ≥ 5, de préférence de ≥ 10 et la couche filtrante contenant en outre une matrice, à savoir une matrice de matière fibreuse, de préférence dotée de fibres de cellulose.

5. Procédé selon la revendication 4, **caractérisé en ce que** l'absorbant, dans une étape préliminaire, est prémélangé avec un milieu de support, en particulier avec de l'eau et est mélangé ensuite avec les autres ingrédients de la couche filtrante.

6. Procédé pour l'élimination d'une matière, qui affecte le goût, à savoir le 2,4,6-trichloroanisole, du vin, comprenant l'étape de mise en contact, en particulier par passage à travers une couche filtrante, la couche filtrante étant une feuille de filtre pré-confectionnée à plat, contenant un absorbant présentant le motif de construction périodique (MCP) de la faujasite, à savoir doté d'un rapport de Si/Al de ≥ 5, de préférence de ≥ 10, la couche filtrante contenant en outre une matrice, à savoir une matrice de matière fibreuse, de préférence dotée de fibres de cellulose.
